# EUROPEAN PATENT SPECIFICATION

(11) **EP 1 542 327 B1**
(45) Date of publication and mention of the grant of the patent: **10.01.2018**
(21) Application number: 04078126.2
(22) Date of filing: 15.11.2004
(51) Int. Cl.: H02G 3/04

(54) **Raceway for electric wiring or other**
Kanal für elektrische Verdrahtung
Goulotte pour cablage electrique

(30) Priority: 18.11.2003 IT MI20032237
(43) Date of publication of application: 15.06.2005
(73) Proprietor: Bocchiotti S.p.A., 20127 Milano (IT)
(72) Inventor: Canepa, Mauro, 16157 Genova (IT)
(74) Representative: Branca, Emanuela

(56) References cited:
- WO-A-2006/031805
- DE-U- 1 912 968
- DE-U- 6 752 493
- FR-A- 2 682 229

## Description

The present invention concerns a raceway for electric wiring or other.

In particular, the invention refers to a raceway for housing electric or other types of cables and wires.

For some time, in the field of electric wiring installation, raceways for housing electric and other types of wiring have been known.

Such wiring comprises two side walls that extend substantially at a right-angle from a base, and the aforementioned walls are arranged to engage, with their free ends, a removable cover that can be applied to close off the raceway.

In recent times, raceways have also been developed that have the walls made not in a single piece but divided into separate strips, possibly through splitting.

Such raceways are ergonomic for the insertion of wiring since they allow the independent widening of each strip manually and with little effort.

A drawback encountered in the aforementioned raceways with walls in strips is relative to the fact that the user, not always equipped with protective gloves, coming into contact with the strips, can easily suffer cuts and abrasions, since the aforementioned strips, obtained by shearing or similar processing, have relatively sharp edges.

An analogous drawback also occurs in the case in which the recommended gloves are worn since the edges of the strips still tend to get caught in the fabric or in the material of the glove.

It is also possible that the cable undergoes cuts or abrasions.

To avoid the aforementioned deficiencies of the prior art, raceways have been proposed that, after shearing, are subjected to burring operations like brushing or to chamfering operations or else to upsetting to remove the sharp edge of the strip by bevelling it or to round it. DE 191296U shows a soft covering of the sides of the splits in order to protect the cables from damage.

Such operations only partially solve the problem and, furthermore, are polluting and/or noisy.

Indeed, brushing produces dust and, in general, all of the operations, being noisy in any case, require sound insulation of the machine.

Finally, it is clear that each additional operation involves increases in production costs that are difficult for the buyer to meet and can lead to the product becoming uncompetitive in the market.

A first purpose of the present invention is therefore that of providing a raceway for housing electric or other types of wiring that does not have the drawbacks in the installation step of raceways of the prior art, in particular that does not cause cuts and abrasions, and that can easily be manipulated during the installation of wiring.

Another purpose of the present invention is that of providing a raceway that does not require further processing, in particular polluting and/or noisy processing to make the desired protection.

These and other purposes and advantages of the present invention are accomplished through a raceway for housing electric or other types of wiring according to that which is outlined in claim 1.

Further characteristics of the invention form the object of the dependent claims.

The raceway for electric wiring or other according to the invention is U-shaped defined by a base and a pair of walls, so as to house electrical or other types of wiring inside of it, each wall being made in the form of a plurality of separate shaped strips, each strip having a zone made from soft plastic material on at least a portion of the free end, inside and/or outside the raceway.

The characteristics and the advantages of a raceway for electric or other type of wiring according to the present invention shall become clearer from the description, given as an example and not for limiting purposes, referring to the attached schematic drawings, in which:

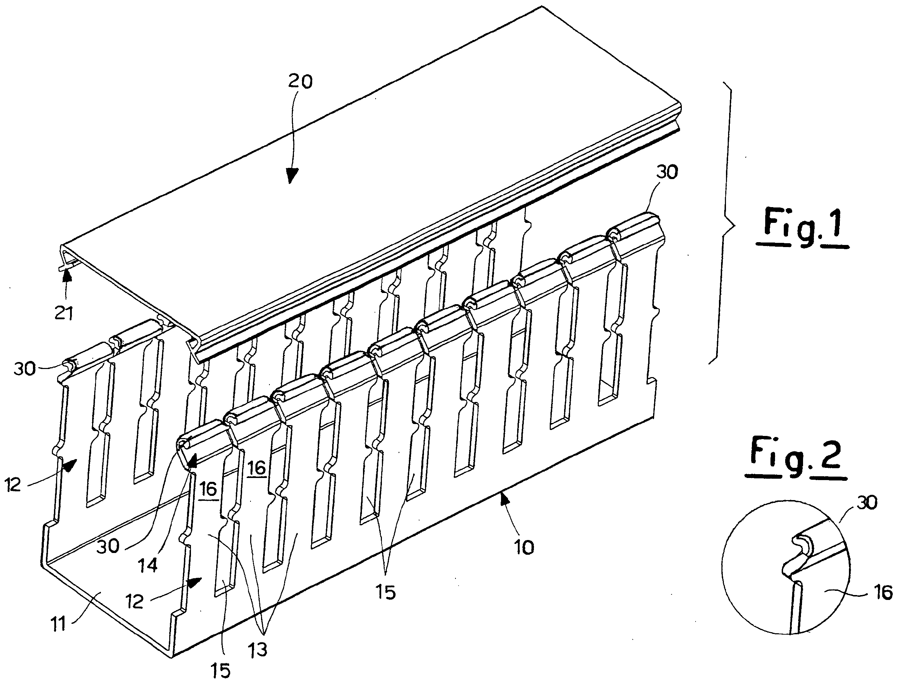

figure 1 is an exploded perspective view of the raceway according to the invention;
figure 2 shows a detail of the raceway of figure 1;
figure 3 schematically shows a side view of a portion of raceway of figure 1;
figures 4 to 8 illustrate front section views of as many embodiments of a raceway;
figure 9 illustrates the raceway of figure 8 with the cover locked in place.

With reference to the figures, a raceway 10, for electric wiring or other, is U-shaped defined by a base 11 and a pair of walls 12, which extend substantially perpendicularly from said base, so as to house electric or other types of wiring inside it.

Each wall is made in the form of a plurality of shaped strips 13 possibly separated from each other through splits 15.

Such splits, generally but not exclusively, extend vertically and have a width that can substantially vary from 0 mm (strips in contact with each other) to 8 mm and beyond according to the technological requirements.

Each shaped strip 13 has an upright 16 connected to the base 12, with a free end 14 at the top that is preferably but not exclusively bent into a hook so as to be able to engage the correspondingly arranged edge 21 of a cover 20 suitable for closing the raceway.

Currently, the hook-shape of the free end 14 is particularly advantageous for engaging the cover, however, the invention is not limited to just application to such a shape, being able to be made on any type of strip however shaped.

In order to make the manipulation of the strips easy, each of them has a zone 30 made from soft plastic material on at least a portion of the free end 14, inside and/or outside the raceway 10.

Such a zone 30 made from soft plastic material can be made according to any technologically applicable method.

Purely as an example, the zone 30 can be made through co-moulding, co-extrusion or post-extrusion of a soft polymer, for example an elastomeric material, a thermoplastic elastomer or a plasticised plastic material, on the relatively more rigid plastic of the raceway.

The soft plastic material can also be applied in other ways like for example through adhesion ensured by chemical affinity, or else it can be applied through a different material directly and suitably inserted in a die or in a mould so as to completely replace the end portion of each strip.

In any case the zone 30 covers the strip portion that is most easily contacted by the user's hands avoiding them suffering cuts and abrasions by contact with pointed and sharp edges.

Purely as an example, the free end 14 of each strip is described made like a hook facing towards the outside of the raceway.

In such a hook configuration of the free end 14, an attachment portion 17 directly connected to the upright 16 of the strip and inclined towards the inside of the raceway is defined.

Such an attachment portion is connected to a hook 18 aiming towards the outside of the raceway so as to hook the cover 20 allowing it to be unhooked through pressing the strips towards the inside.

The zone 30 made from soft plastic material can be present, according to requirements, in portions different from strips, facing both towards the outside and towards the inside of the raceway.

Regarding this, respective outer surfaces 14' and 16' facing towards the outside of the raceway and inner surfaces 14'' and 16" substantially facing towards the inside or at least defining the inner volume of the raceway are defined at the free end 14 and at the upright 16.

In the same way, the attachment portion 17 has an outer surface 17' and an inner surface 17''.

The hook 18 correspondingly has a concave surface 18' facing towards the outside to hook the cover, and a convex surface 18" that goes from the inner surface 17" of the attachment portion 17 to connect to said concave surface 18' defining the tip 19 of the hook.

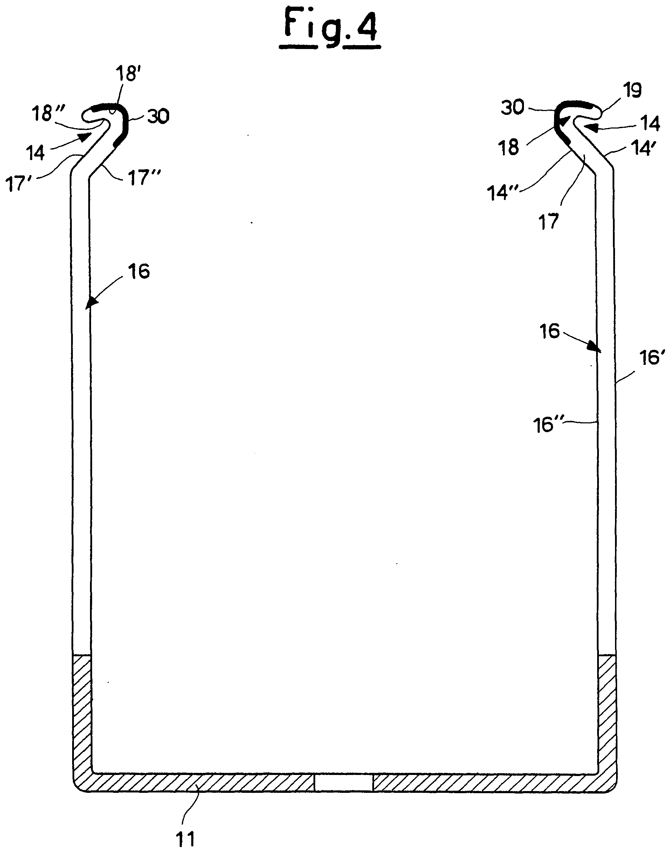

With reference to figure 4 an embodiment of the invention is illustrated in which the zone 30 is partially present on the convex surface 18'' of the hook and inner surface 17'' of the attachment portion leaving a portion close to the tip 19 free.

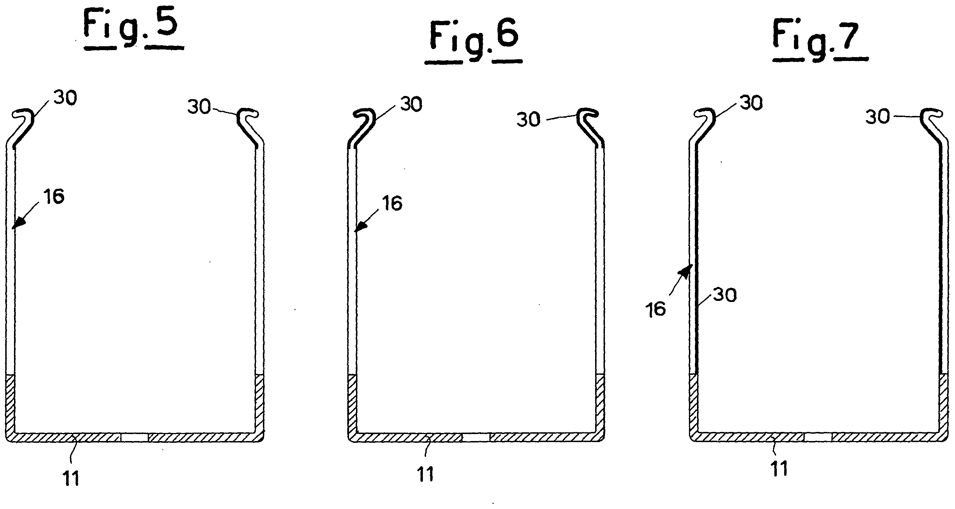

In figure 5 a second embodiment of the invention is illustrated in which the zone 30 is partially present on the convex surface 18'' of the hook, so as to leave a portion close to the tip 19 free, and it extends up to the entire inner surface 14'' of the attachment edge and at least to the connection of this with the inner surface 16" of the upright 16.

In figure 6 a third embodiment of the invention is illustrated in which the zone 30 is present on the entire free end 14, both on the inner surface 14" and on the outer surface 14' and it extends both inside and outside the raceway at least up to the connection of the free end with the inner surface 16" and outer surface 16' of the upright 16.

In figure 7 a fourth embodiment of the invention is illustrated in which the zone 30 is partially present on the convex surface 18" of the hook, so as to leave a portion close to the tip 19 free, and it extends for the entire inner surface 14" of the attachment edge up to the entire inner surface 16" of the upright 16.

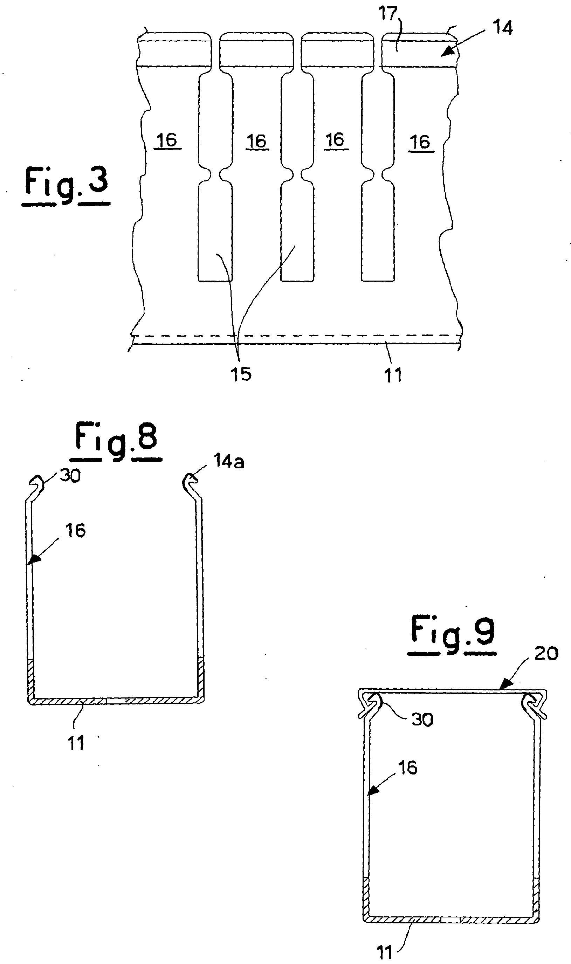

In figures 8 and 9 a variant embodiment of the raceway is illustrated in which the profile of the free end 14 has a cusp 14a intended to come into contact with the cover 20 to increase the fastening tension thereof.

The zone 30 is illustrated, in this variant, substantially similar to that of the first embodiment illustrated in figure 4, i.e. it is partially present on the convex surface 18" of the hook and inner surface 17" of the attachment portion leaving a portion close to the tip 19 free, however said zone 30 can be in any position of the strip.

The described embodiments are, of course, only examples, with it possible to make the zone 30 substantially in any inner our outer configuration technologically useful in the raceway using the same inventive principle.

In the same way, the shape of the raceway can undergo all of the modifications that make it technologically suitable for the aforementioned purposes.

## Claims

1. Raceway (10) for electric wiring or other is U-shaped defined by a base (11) and a pair of walls (12), which extend substantially perpendicularly from said base, so as to house electrical or other types of wiring inside of it, each wall (12) being made in the form of a plurality of separate shaped strips (13) separated from each other through splits (15) and having an upright (16) connected to said base (11) with a free end (14) at the top,
wherein said free end (14) of the strip (13) at the top is bent into a hook so as to be able to engage the correspondingly arranged edge (21) of a cover (20) suitable for closing the raceway,
said hook-shaped being defined by an attachment portion (17) directly connected to the upright (16) of the strip and inclined towards the inside of the raceway and by a hook (18) connected to such an attachment portion and directed towards the outside of the raceway, the attachment portion (17) having an outer surface (17') and an inner surface(17"), and the hook (18) correspondingly having a concave surface (18') facing towards the outside and a convex surface (18") that goes from the inner surface (17'') of the attachment portion (17) to connect to said concave surface (18') defining the tip (19) of the hook (18) , **characterized in that** each shaped strip (13) has a zone (30) made from soft plastic material on at least a portion of the free end (14), inside and/or outside the raceway (10).

2. Raceway (10) for wiring according to claim 1,
wherein the zone (30) is partially present on the convex surface (18") of the hook (18) and inner surface (17") of the attachment portion (17) leaving a portion close to the tip (19) free.

3. Raceway (10) for wiring according to claim 1,
wherein the zone (30) is partially present on the convex surface (18") of the hook, so as to leave a portion close to the tip (19) free, extending up to the entire inner surface (14") of the attachment edge and at least to the connection of this with the inner surface (16") of the upright (16).

4. Raceway (10) for wiring according to claim 1,
wherein the zone (30) is present on the entire free end (14), both on the inner surface (14") and on the outer surface (14') extending both inside and outside the raceway at least up to the connection of the free end (14) with the inner surface (16") and outer surface (16') of the upright (16).

5. Raceway (10) for wiring according to one of the claims from 2 to 4, wherein said zone (30) made from soft plastic material extends along the inner surface (16") of the upright (16) of the strip (13).

6. Raceway (10) for wiring according to one of the claims from 2 to 5, wherein the profile of the free end (14) has a cusp (14a) intended to come into contact with a cover (20) suitable for closing the raceway.

## Patentansprüche

1. Kanal (10) für elektrische oder andere Verdrahtung ist U-förmig definiert durch eine Basis (11) und ein Paar von Wandungen (12), die sich im Wesentlichen senkrecht aus der Basis erstrecken, um elektrische oder andere Arten von Verdrahtung hierin aufzunehmen, wobei jede Wandung (12) in Form einer Mehrzahl getrennt geformten Bändern (13) hergestellt ist, die durch Spalte (15) voneinander getrennt sind und eine Stütze (16) aufweisen, die mit der Basis (11) mittels eines freien Endes (14) an der Spitze verbunden ist, wobei das freie Ende (14) des Bandes (13) an der Spitze zu einem Haken gebogen ist, um in der Lage zu sein, in die entsprechend angeordnete Kante (21) einer zum Verschließen des Kanals geeigneten Abdeckung (20) einzugreifen,
wobei das hakenförmige durch einen Befestigungsabschnitt (17) definiert ist, der direkt mit der Stütze (16) des Bandes verbunden und zur Innenseite des Kanals geneigt ist, sowie durch einen Haken (18), der mit einem derartigen Befestigungsabschnitt verbunden und zur Außenseite des Kanals gerichtet ist, wobei der Befestigungsabschnitt (17) eine Außenfläche (17') und eine Innenfläche (17") aufweist und der Haken (18) korrespondierend eine konkave Fläche (18') aufweist, die der Außenseite zugewandt ist, und eine konvexe Fläche (18"), die der Innenfläche (17") des Befestigungsabschnitts (17) ausgeht, um sich mit der konkaven Fläche (18') zu verbinden, die die Spitze (19) des Hakens (18) definiert,
**dadurch gekennzeichnet, dass** jedes geformte Band (13) einen aus weichem Kunststoff hergestellten Bereich (30) auf wenigstens einem Abschnitt des freien Endes (14) innerhalb und/oder außerhalb des Kanals (10) aufweist.

2. Kanal (10) für Verdrahtung nach Anspruch 1, wobei der Bereich (30) teilweise auf der konvexen Fläche (18") des Hakens (18) und der Innenfläche (17") des Befestigungsabschnitts (17) vorliegt und einen Abschnitt nahe der Spitze (19) frei lässt.

3. Kanal (10) für Verdrahtung nach Anspruch 1, wobei der Bereich (30) teilweise auf der konvexen Fläche (18") des Hakens vorliegt, derart, dass ein Abschnitt nahe der Spitze (19) frei bleibt, der sich bis zur gesamten Innenfläche (14") der Befestigungskante und wenigstens bis zur Verbindung derselben mit der Innenfläche (16") der Stütze (16) erstreckt.

4. Kanal (10) für Verdrahtung nach Anspruch 1, wobei der Bereich (30) auf dem gesamten freien Ende (14), sowohl auf der Innenfläche (14") als auch auf der Außenfläche (14') vorliegt und sich sowohl innerhalb als auch außerhalb des Kanals wenigstens bis zur Verbindung des freien Endes (14) mit der Innenfläche (16") und der Außenfläche (16') der Stütze (16) erstreckt.

5. Kanal (10) für Verdrahtung nach einem der Ansprüche von 2 bis 4, wobei der aus weichem Kunststoff hergestellte Bereich (30) sich längs der Innenfläche (16") der Stütze (16) des Bandes (13) erstreckt.

6. Kanal (10) für Verdrahtung nach einem der Ansprüche von 2 bis 5, wobei das Profil des freien Endes (14) einen Scheitelpunkt (14a) aufweist, der dazu bestimmt ist, mit einer zum Verschließen des Kanals geeigneten Abdeckung (20) in Kontakt zu kommen.

## Revendications

1. Chemin de câbles (10) pour câblage électrique ou autre en forme de U défini par une base (11) et une paire de parois (12), qui s'étendent sensiblement perpendiculairement à partir de ladite base, de manière à loger un câblage électrique ou d'autres types de câblage dans celui-ci, chaque paroi (12) étant réalisée sous la forme d'une pluralité de bandes profilées séparées (13) séparées les unes de autres par des fentes (15) et ayant un montant (16) connecté à ladite base (11) avec une extrémité libre (14) au sommet, dans lequel ladite extrémité libre (14) de la bande (13) au sommet est pliée en forme de crochet de manière à être adaptée pour engager le bord agencé de manière correspondante (21) d'un couvercle (20) adapté pour fermer le chemin de câbles, ladite forme de crochet étant définie par une portion de fixation (17) directement connectée au montant (16) de la bande et inclinée vers l'intérieur du chemin de câbles et par un crochet (18) connecté à une telle portion de fixation et dirigé vers l'extérieur du chemin de câbles, la portion de fixation (17) ayant une surface extérieure (17') et une surface intérieure (17"), et le crochet (18) ayant de manière correspondante une surface concave (18') faisant face vers l'extérieur et une surface convexe (18") qui part de la surface intérieure (17") de la portion de fixation (17) pour se connecter à ladite surface concave (18') en définissant la pointe (19) du crocher (18), **caractérisé en ce que** chaque bande profilée (13) a une zone (30) constituée de matière plastique souple sur au moins une portion de l'extrémité libre (14), à l'intérieur et/ou à l'extérieur du chemin de câbles (10).

2. Chemin de câbles (10) pour câblage selon la revendication 1, dans lequel la zone (30) est présente partiellement sur la surface convexe (18") du crochet (18) et la surface intérieure (17") de la portion de fixation (17) en laissant libre une portion proche de la pointe (19).

3. Chemin de câbles (10) pour câblage selon la revendication 1, dans lequel la zone (30) est présente partiellement sur la surface convexe (18") du crochet, de manière à laisser libre une portion proche de la pointe (19), en s'étendant jusqu'à toute la surface intérieure (14") du bord de fixation et au moins à la connexion de celle-ci avec la surface intérieure (16") du montant (16).

4. Chemin de câbles (10) pour câblage selon la revendication 1, dans lequel la zone (30) est présente sur toute l'extrémité libre (14), à la fois sur la surface intérieure (14") et sur la surface extérieure (14') en s'étendant à la fois à l'intérieur et à l'extérieur du chemin de câbles au moins jusqu'à la connexion de l'extrémité libre (14) avec la surface intérieure (16") et la surface extérieure (16') du montant (16).

5. Chemin de câbles (10) pour câblage selon une des revendications 2 à 4, dans lequel ladite zone (30) constituée de matière plastique souple s'étend le long de la surface intérieure (16") du montant (16) de la bande (13).

6. Chemin de câbles (10) pour câblage selon une des revendications 2 à 5, dans lequel le profil de l'extrémité libre (14) a une cuspide (14a) destinée à venir en contact avec un couvercle (20) adapté pour fermer le chemin de câbles.
